# EUROPÄISCHE PATENTANMELDUNG

(11) **EP 1 533 559 A1**
(43) Veröffentlichungstag der Anmeldung: **25.05.2005**
(21) Anmeldenummer: 04105917.1
(22) Anmeldetag: 19.11.2004
(51) Int. Cl.: F16L 55/027

(54) **Geräuschdämpfungselement für Strömungskreise**

(30) Priorität: 21.11.2003 DE 10354453
(71) Anmelder: ROBERT BOSCH GMBH, 70442 Stuttgart (DE)
(72) Erfinder: Wu, Datong, 75181 Pforzheim (DE); Loehmann, Juergen, 70195 Stuttgart (DE)

(57) **Zusammenfassung**

Es wird ein Geräuschdämpfungselement (14) für einen Strömungskreis mit einem Strömungsraum (20) zur Aufnahme eines Durchflussmengenreglers (18) vorgeschlagen. In Strömungsrichtung hinter dem Strömungsraum (20) ist ein erster verengter Strömungsabschnitt (21) vorgesehen, an den sich ein erweiterter Strömungsabschnitt (22) anschließt.

## Beschreibung

Die Erfindung betrifft ein Geräuschdämpfungselement für einen Strömungskreis, insbesondere zum Einsatz in Heizwasserkreisen von Heizungsanlagen, nach dem Oberbegriff des Anspruchs 1.

### Stand der Technik

Zur Durchflussmengenregelung in hydraulischen und pneumatischen Systemen werden Durchflussmengenregler in Form von Mengenregelventilen eingesetzt. Dabei wird im Allgemeinen im Bereich des Durchflussmengenreglers bzw. des Mengenregelventils der strömungsführende Leitungsquerschnitt verjüngt um dadurch die im Strömungskreis strömende Fluidmenge unabhängig vom Druck weitgehend konstant zu halten. Als besonders zweckmäßig haben sich einfache und kostengünstige Mengenregelventile bewährt, die nach dem Prinzip eines O-Ring-Reglers arbeiten. In dem Bereich der Verjüngung ist die Strömungsgeschwindigkeit bei gleichzeitiger Abnahme des statischen Drucks erhöht. Bei Flüssigkeiten, zum Beispiel bei Wasser, können, sobald der Dampfdruck der Flüssigkeit größer als der umgebende Druck ist, Dampfblasen entstehen, welche anschließend implodieren, was als Kavitationsgeräusch bezeichnet wird. Bei einer hohen Druckdifferenz zwischen dem Druck vor dem Durchflussmengenregler und dem Druck hinter dem Durchflussmengenregler tritt ein starkes Zischgeräusch am Einbauort auf. Die Amplitude des Kavitationsgeräusches hängt dabei direkt von der Mach-Zahl ab. Der entstehende Flüssigkeitsschall wird über das Strömungsmedium und die Rohrleitungswand zunächst in das angeschlossene Leitungssystem übertragen, das dann den Luftschall anregt.

Das lästige Strömungsgeräusch in Heizungsanlagen ist besonders im Wohnbereich unerwünscht. Bei sehr hohen Wasserdruckdifferenzen vor und nach dem O-Ring-Regler kann das Strömungsgeräusch so hoch sein, dass derselbe nicht in Heizungsanlagen eingesetzt werden kann. Auf Grund der geringen Kosten, wird jedoch die Verwendung von O-Ring-Reglern bevorzugt.

Es wurde bereits in der DE-Patentanmeldung 103 43 999.4 vorgeschlagen, den angeregten Körperschall nach außen mittels einer innerhalb der Rohrleitung ausgebildeten Elastomerbeschichtung zu dämpfen. Ist jedoch der Durchflussmengenregler in einem Kunststoffgehäuse oder in einer Kunststoffleitung installiert, ist der Dämpfungseffekt mittels Elastomere nicht zielführend, da die akustische Eigenschaft des Kunststoffs ähnlich wie die Eigenschaft der Elastomere ist. Kunststoffe werden jedoch zunehmend auf Grund ihrer günstigen Herstellbarkeit und ihres niedrigen Preises eingesetzt. Der relativ hohe Geräuschpegel der Regelventile in einem Kunststoffgehäuse schmälert jedoch die breite Anwendung.

Aufgabe der vorliegenden Erfindung ist es, einen Strömungskreis mit Mengenregelventilen bzw. Durchflussmengenregler zu schaffen, bei dem die am Mengenregelventil bzw. Durchflussmengenregler entstehenden Kavitationsgeräusche in ihrer Ausbreitung im Rohrleitungssystem weitgehend unterbunden werden, so dass auch der Einsatz von Kunststoff-Rohrleitungen beispielsweise in Heizungsanlagen möglich ist.

### Vorteile der Erfindung

Die Aufgabe der Erfindung wird durch ein Geräuschdämpfungselement mit den kennzeichnenden Merkmalen des Anspruchs 1 gelöst. Durch die ausgebildete Verengung und Erweiterung des Strömungsquerschnitts wird zum einen der strömungsabhängige Energieverlust erhöht und zum anderen der Flüssigkeitsschall (Kavitationsgeräusch) durch die Impedanzsprünge mehrmals zurückreflektiert. Durch die Erhöhung des Energieverlustes ist es möglich, die Ausbreitung und die Stärke der Kavitationsgeräusche zu unterdrücken, da an jeder Querschnittsveränderung ein akustischer Impedanzsprung auftritt, der zur Schallreflektion innerhalb des Leitungssystems führt. Die vorliegende Erfindung benötigt somit keine Schalldämpfer mit beweglichen Teilen, wodurch die Schalldämpfung robust, einfach und kostengünstig realisierbar ist.

Vorteilhafte Weiterbildungen der Erfindung sind mit den Merkmalen der Unteransprüche möglich. Vorteilhaft ist es, wenn der hydraulische Durchmesser des Strömungsraumes für den Durchflussmengenregler zumindest annähernd dem hydraulischen Durchmesser des erweiterter Strömungsabschnitt entspricht. Für den Dämpfungseffekt des Strömungsgeräusches sind die Längen sowie die hydraulischen Durchmesser der Strömungsabschnitte ausschlaggebend, so das eine optimale Geräuschminderung von den Längen- und Flächenverhältnis der Verengungen und der Erweiterungen abhängig ist, wobei das Verhältnis strömungs- und mengenspezifisch ist. Eine besonders wirkungsvolle Schalldämpfung wird erreicht, wenn der erweiterte Strömungsabschnitt eine Länge L2 = f/(D21)² aufweist, wobei D21 der hydraulische Durchmesser des ersten verengten Strömungsabschnitts ist und der Faktor f ein Wert zwischen 200 bis 450 mm³, vorzugsweise zwischen 300 bis 400 mm³ ist. Wirkungsvoll ist außerdem, wenn sich an den erweiterten Strömungsabschnitt ein zweiter verengter Strömungsquerschnitt anschließt. Dabei wurde als zweckmäßige Beziehung ermittelt, wenn der hydraulische Durchmesser D23 des zweiten verengten Strömungsabschnitts und der hydraulische Durchmesser D21 des ersten verengten Strömungsabschnitt folgende Beziehung aufweisen: 0,6 D21 < D23 < 1,2 D21, vorzugsweise 0,9 D21< D23 < 1,1 D21. Die Verengungen sind dabei gemäß einer ersten Ausführungsform mittels eines zentrisch zum Strömungskanal verlaufenden Kanals ausgeführt. Eine weitere Ausführungsform besteht darin, die Verengung des Strömungsquerschnitts durch mehrere im Wesentlichen parallel verlaufende Kanäle auszuführen. Dabei ist es zweckmäßig, wenn die parallel verlaufenden Kanäle über den Querschnitt des Strömungskanals gleichmäßig verteilt sind. Eine gute Dämpfungswirkung ist dadurch erreichbar, wenn am strömungsseitigen Einlass die Verengungen eine gegen die Strömung gerichtete Strömungskante aufweist. Durch Zusammensetzen von mindesten zwei Teilen lässt sich auf besonders einfache Weise ein Geräuschdämpfungselement erzielen. Eine fertigungstechnisch besonders einfache Herstellung ist durch die Verwendung von mindestens zwei identischen Teilen (Gleichteile) möglich.

### Ausführungsbeispiele

Ausführungsbeispiele der Erfindung sind in der Zeichnung dargestellt und in der nachfolgenden Beschreibung näher erläutert.

Es zeigen
- Figur 1: einen Abschnitt eines Strömungskreises mit einem Geräuschdämpfungselement gemäß einem ersten Ausführungsbeispiel,
- Figur 2: einen Ausschnitt eines Strömungskreises mit einem Geräuschdämpfungselement gemäß einem zweiten Ausführungsbeispiel,
- Figur 3: ein Geräuschdämpfungselement gemäß einem dritten Ausführungsbeispiel und
- Figur 4: ein Geräuschdämpfungselement gemäß einem vierten Ausführungsbeispiel.

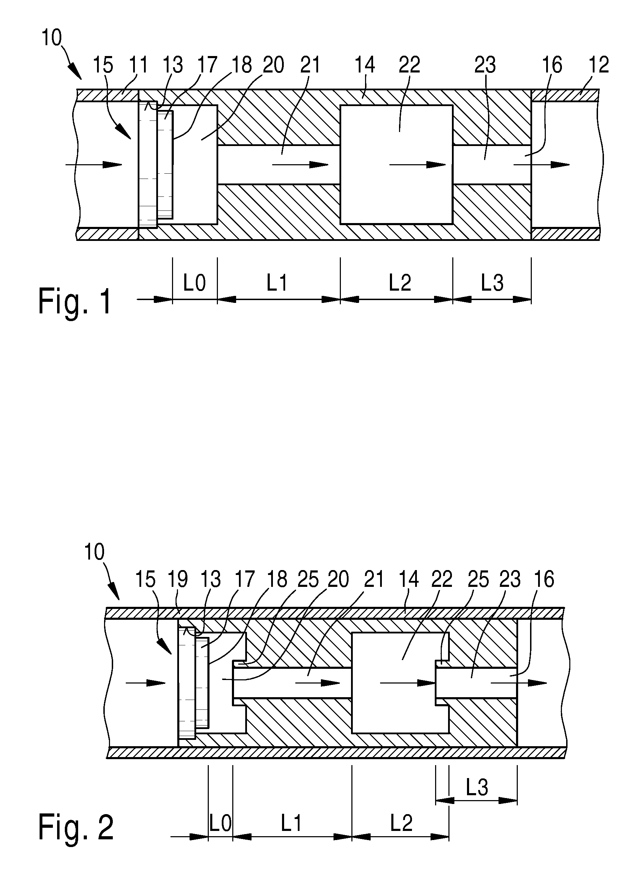

Figur 1 zeigt einen Ausschnitt eines Strömungskreis mit einem Strömungskanal 10, der einen ersten Rohrleitungsabschnitts 11 und einen zweiten Rohrleitungsabschnitt 12 aufweist. Zwischen dem ersten Rohrleitungsabschnitt 11 und dem zweiten Rohrleitungsabschnitt 12 ist ein Geräuschdämpfungselement 14 geschaltet. Die Strömungsrichtung des im Strömungskreis strömenden Fluids ist mit Pfeilen angedeutet.

Das Geräuschdämpfungselement 14 weist einen strömungsseitigen Einlass 15 und einen strömungsseitigen Auslass 16 auf. Am Einlass 15 ist eine Aufnahme 13 ausgebildet, in der einlassseitig ein Gehäuse 17 eines Durchflussmengenreglers 18 angeordnet ist. Der Durchflussmengenregler 18 ist dabei ein nicht näher dargestellter O-Ring-Regler.

In Strömungsrichtung hinter dem Durchflussmengenregler 18 befindet sich ein weiter Strömungsraum 20 mit einer sich in Strömungsrichtung erstreckenden Ausdehnung L0 schließt sich in Strömungsrichtung hinter dem Durchflussmengenregler 18 ein erster verengter Strömungsabschnitt 21 mit einer sich in Strömungsrichtung erstreckenden Ausdehnung L1 an. In Strömungsrichtung hinter dem ersten verengten Strömungsabschnitt 21 befindet sich ein erweiterter Strömungsabschnitt 22 mit einer in Strömungsrichtung erstreckenden Ausdehnung L2 und daran anschließend ein zweiter verengter Strömungsabschnitt 23 mit einer in Strömungsrichtung sich erstreckenden Ausdehnung L3. Der zweite verengte Strömungsabschnitt 23 mündet an den sich an das Geräuschdämpfungselement 14 anschließenden zweiten Rohrleitungsabschnitt 12. Der erste verengte Strömungsabschnitt 21 und der zweite verengte Strömungsabschnitt 23 ist jeweils als ein zentrisch zum Strömungskanal 10 verlaufender Kanal, beispielsweise in Form einer Bohrung ausgebildet.

Für den Dämpfungseffekt des Strömungsgeräusches sind die Längen L0, L1, L2, L3 sowie die hydraulischen Durchmesser der Strömungsabschnitte 20, 21, 22, 23 ausschlaggebend. Die Querschnittsverhältnisse des ersten verengten Strömungsquerschnitts 21 zu dem erweiterten Strömungsabschnitt 22, des erweiterten Strömungsabschnitts 22 zu dem zweiten verengten Strömungsabschnitt 23 sowie des ersten verengten Strömungsabschnitts 21 zum zweiten verengten Strömungsabschnitt 23 sind für das Dämpfungsverhalten entscheidend. Die Längenverhältnisse der Längen L0, L1, L2 und L3 und die Querschnittsverhältnisse der Strömungsabschnitte 20, 21, 22 und 23 sind strömungs- und mengenspezifisch.

Eine wirkungsvolle Schalldämpfung wird erreicht, wenn der hydraulische Durchmesser D21 des ersten verengten Strömungsabschnitts 21 und der hydraulische Durchmesser D23 des zweiten verengten Strömungsabschnitts 23 folgende Beziehung aufweisen: 0,6 D21 < D23 < 1,2 D21, vorzugsweise 0,9 D21 < D23 < 1,1 D21.
Darüber hinaus tritt eine wirkungsvolle Schalldämpfung bei einer Länge L2 des erweiterten Strömungsabschnitts 22 mit L2 = f / (D21)² auf, wobei der Faktor f ein Wert zwischen 200 bis 450 mm³, vorzugsweise zwischen 300 bis 400 mm³ ist.

Beim Ausführungsbeispiel gemäß Figur 2 ist der Strömungskanals 10 von einer Rohrleitung 19 des Strömungskreises gebildet, innerhalb der das Geräuschdämpfungselement 14 eingesetzt ist. Im Unterschied zum Ausführungsbeispiel in Figur 1 sind bei diesem Geräuschdämpfungselement 14 die beiden verengten Strömungsabschnitte 21 und 23 am Strömungseingang jeweils mit einer der Strömung entgegengerichteten, umlaufenden Kante 25 ausgeführt. Die entgegen der Strömungsrichtung gerichteten Kanten 25 bewirken eine zusätzliche Geräuschdämpfung.

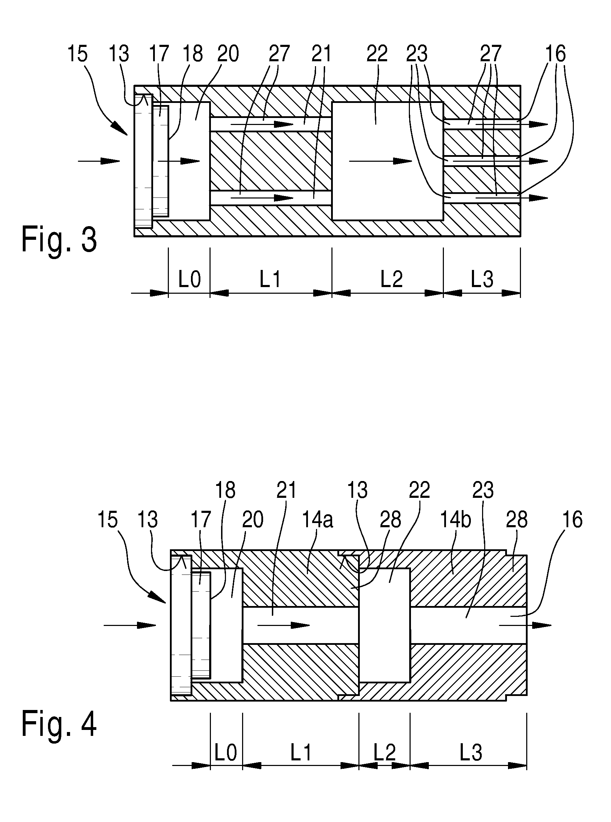

Bei dem in Figur 3 dargestellten Ausführungsbeispiel des Geräuschdämpfungselements 14 sind zwischen dem Strömungsraum 20 und dem erweiterten Strömungsabschnitt 22 sowie dem angrenzenden, in Figur 3 nicht dargestellten, Rohrleitungsabschnitt mehrere im Wesentlichen parallel verlaufende Kanäle 27 ausgebildet, die die verengten Strömungsabschnitte 21 und 23 bilden. Dabei sind zwischen dem Strömungsraum 20 und dem erweiterten Strömungsabschnitt 22 als Kanäle 27 beispielsweise zwei Bohrungen und zwischen dem erweiterten Strömungsabschnitt 22 und dem anschließenden, nicht dargestellten Rohrleitungsabschnitt als Kanäle 27 beispielsweise drei Bohrungen ausgebildet. Es ist aber denkbar, mehr als die gezeigten Kanäle 27 bzw. Bohrungen vorzusehen, wobei jedoch insgesamt eine Verengung des Strömungsquerschnitts in diesen Strömungsabschnitten notwendig ist. Zweckmäßigerweise sind die Kanäle 27 über den Querschnitt des Strömungskanals 10 gleichmäßig verteilt von dem Strömungsraum 20 zum erweiternden Strömungsabschnitt 22 und von dort weiter zum angrenzenden, nicht dargestellten Rohrleitungsabschnitt geführt. Es ist auch denkbar, die beim Ausführungsbeispiel gemäß Figur 2 beschriebenen, der Strömung entgegengerichteten Kanten 25 auch jeweils am strömungsseitigen Einlass der Kanäle 27 anzubringen.

Ein weiteres Ausführungsbeispiel eines Geräuschdämpfungselements 14 geht aus Figur 4 hervor. Hierbei ist das Geräuschdämpfungselement 14 aus zwei identischen Teilen 14a und 14b zusammengesetzt, die jeweils ineinandersteckbare Gehäuseteilkörper mit einer Einlass-Seite und einer Auslass-Seite bilden. An der Einlassseite ist jeweils die Aufnahme 13 ausgebildet. An der Auslassseite befmdet sich ein Bund 28, der mit der Aufnahme 13 korrespondiert, so dass der Bund 28 des Teils 14a in der Aufnahme 13 des Teils 14b passgerecht eingesteckt werden kann. Am strömungsseitigen Einlass 15 ist in die Aufnahme des Teils 14a - wie bei den Ausführungsbeispielen der Figuren 1 bis 3 - der Durchflussmengenregler 18 eingesetzt. Zum einfachen Zusammensetzen der Teile 14a, 14b und des Durchflussmengenreglers 18 sind an den Aufnahmen 13 jeweils nicht dargestellt Elemente für eine Schnapp- oder Rastverbindung ausgeführt. Dabei wird der Durchflussmengenregler 18 mit Presspassung in die Aufnahme 13 des ersten Teils 14a eingepresst und mittels der Schnappverbindung arretiert, so dass der Durchflussmengenregler 18 bei Druckschwankungen nicht aus der Aufnahme 13 gleiten kann. Das zweite Teil 14b wird nach dem gleichen Prinzip mit dem ersten Teil 14a mittels Schnappverbindung zusammengesteckt, wobei der Bund 28 des ersten Teils 14a in die Aufnahme 13 des zweiten Teils 14b gesteckt wird.

Jedes Teil 14a und 14b besitzt ferner einen weiten Strömungsabschnitt und einen engen Strömungsabschnitt. Der weite Strömungsabschnitt des ersten Teils 14a, der sich in Strömungsrichtung an den Durchflussmengregler 18 anschließt, bildet den weiten Strömungsraum 20. Beim zweiten Teil 14b übernimmt der weite Strömungsabschnitt die Funktion der Erweiterung 22. Der enge Strömungsabschnitt bildet beim ersten Teil 14a die Verengung 21 und beim zweiten Teil 14b die Verengung 23.

Die Verwendung von zwei identischen Teilen 14a und 14b bringt fertigungstechnische Vorteile. Ein komplettes Geräuschdämpfungselement 18 lässt sich somit auf einfache Weise durch Ineinanderstecken der Teile 14a und 14b erzeugen. Es ist ebenfalls denkbar mehr als zwei identische Teile bzw. Gehäuseteilkörper aneinander zureihen.

Außerdem ist es möglich, den angeregten Körperschall nach außen zusätzlich mittels einer innerhalb der Rohrleitung ausgebildeten Elastomerbeschichtung zu entkoppeln. Der Querschnitt des Strömungsraums 20 ist größer als der Querschnitt des ersten verengten Strömungsabschnitts 21 bzw. der Summe der Querschnitte der Kanäle 27, die vom Strömungsraum 20 zum erweiterten Strömungsabschnitt 22 führen. Der Strömungsraum 20 kann dabei kleiner sein als der Querschnitt des Rohrleitungsabschnitts 11 bzw. der Rohrleitung 19.

Durch die mehrfache Querschnittsverengung und Querschnittserweiterung wird zum einen der strömungsabhängige Energieverlust erhöht und zum anderen wird der Flüssigkeitsschall durch die Impedanzsprünge mehrmals zurückreflektiert. Dadurch entsteht eine wirkungsvolle Geräuschdämpfung innerhalb des Strömungskreises, die sich insbesondere in Heizkreisen von Heizungsanlagen einsetzen lässt.

## Patentansprüche

1. Geräuschdämpfungselement für einen Strömungskreis mit einem Strömungsraum (20) zur Aufnahme eines Durchflussmengenreglers (18), **dadurch gekennzeichnet, dass** in Strömungsrichtung hinter dem Strömungsraum (20) ein erster verengter Strömungsabschnitt (21) vorgesehen ist, an den sich ein erweiterter Strömungsabschnitt (22) anschließt.

2. Geräuschdämpfungselement nach Anspruche 1, **dadurch gekennzeichnet, dass** der hydraulische Durchmesser des Strömungsraumes (20) zumindest annähernd dem hydraulischen Durchmesser des erweiterter Strömungsabschnitt (22) entspricht.

3. Geräuschdämpfungselement nach Anspruche 1 oder 2, **dadurch gekennzeichnet, dass** der erweiterte Strömungsabschnitt (22) eine Länge L2 = f / (D21)² aufweist, wobei D21 der hydraulische Durchmesser des ersten verengten Strömungsabschnitts (21) ist und f ein Faktor mit einem Wert zwischen 200 bis 450 mm³, vorzugsweise zwischen 300 bis 400 mm³ ist.

4. Geräuschdämpfungselement nach Anspruch 1, 2 oder 3 **dadurch gekennzeichnet, dass** sich an den erweiterten Strömungsabschnitt (22) ein zweiter verengter Strömungsquerschnitt (23) anschließt.

5. Geräuschdämpfungselement nach Anspruche 4, **dadurch gekennzeichnet, dass** der zweite verengte Strömungsabschnitts (23) einen hydraulische Durchmesser D23 und der erste verengte Strömungsabschnitt (21) einen hydraulische Durchmesser D21 aufweist und dass 0,6 D21 < D23 < 1,2 D21, vorzugsweise 0,9 D21< D23 < 1,1 D21 ist.

6. Geräuschdämpfungselement nach einem der vorhergehenden Ansprüche 1 bis 5, **dadurch gekennzeichnet, dass** der erste verengte Strömungsabschnitt (21) und/oder der zweite verengte Strömungsabschnitt (23) als ein zentrisch zum Strömungskanal (10) verlaufender Kanal ausgebildet ist.

7. Geräuschdämpfungselement nach Anspruch 6, **dadurch gekennzeichnet, dass** der erste verengte Strömungsabschnitt (21) und/oder der zweite verengte Strömungsabschnitt (23) am strömungsseitigen Eingang jeweils eine der Strömung entgegengerichtete, umlaufende Kante (25) aufweist.

8. Geräuschdämpfungselement nach einem der vorhergehenden Ansprüche 1 bis 5, **dadurch gekennzeichnet, dass** der erste verengte Strömungsabschnitt (21) und/oder der zweite verengte Strömungsabschnitt (23) durch mehrere, den Strömungsquerschnitt verengende, im Wesentlichen parallel verlaufende Kanäle (27) ausgebildet ist.

9. Geräuschdämpfungselement nach Anspruch 7, **dadurch gekennzeichnet, dass** die Kanäle (27) im Wesentlichen gleichmäßig verteilt über die Querschnittsfläche des Strömungskanals (10) angeordnet sind.

10. Geräuschdämpfungselement nach einem der vorhergehenden Ansprüche, **dadurch gekennzeichnet, dass** es aus mindestens zwei Teilen (14a, 14b) zusammengesetzt ist und dass in jedem Teil (14a, 14b) jeweils ein weiter Strömungsabschnitt als Erweiterung (20, 22) und ein enger Strömungsabschnitt als Verengung (21, 23) ausgebildet ist.

11. Geräuschdämpfungselement nach Anspruch 10, **dadurch gekennzeichnet, dass** die beiden Teil Gleichteile sind.
